(19) Europäisches Patentamt
European Patent Office
Office européen des brevets

(11) Publication number: 0 244 357 A2

(12) # EUROPEAN PATENT APPLICATION

(21) Application number: 87810252.4

(22) Date of filing: 21.04.87

(51) Int. Cl.4: G 03 C 5/44
G 03 H 1/18

(30) Priority: 25.04.86 GB 8610191

(43) Date of publication of application:
04.11.87 Bulletin 87/45

(84) Designated Contracting States:
BE CH DE FR GB IT LI NL

(71) Applicant: CIBA-GEIGY AG
Klybeckstrasse 141
CH-4002 Basel (CH)

(72) Inventor: Wood, Glenn Peter
Normanhurst 7 Broomfield Lane
Hale Cheshire (GB)

Davidson, Fiona Elizabeth
20 Church Lane Henbury
Macclesfield Cheshire SK11 9NA (GB)

Doyle, James, Dr.
23 Greenvilla Park
Wilmslow Cheshire SK9 6EJ (GB)

(54) **Black-backed holograms.**

(57) Formation of a light absorbing blackish layer in a holographic material during processing of said material after exposure.

EP 0 244 357 A2

## Description

### Black-backed holograms

The present invention relates to black-backed holograms. The two main types of holograms are transmission holograms wherein the illumination for the reconstruction originates or is reflected from a position on the opposite side of the hologram from the viewer and reflection holograms wherein illumination for the reconstruction comes from the same side of the hologram as the viewer. To aid in the viewing of reflection holograms usually a black backing is applied to the back of the hologram. In this case the hologram usually comprises a sequence of transparent support base, a layer containing the holographic record and a black backing layer, but it may comprise a sequence of black backing layer, a transparent base and a layer containing the holographic record.

The black backing layer may be a paint or black lacquer applied to the holographic layer or to the base, but such layers are difficult to apply and are subject to cracking and flaking. Further, the solvent from which the coating is applied often distorts the holographic image. Alternatively a black laminate can be applied to the hologram but this adds considerably to the cost of the hologram and also increases the thickness of the assembly which in most cases is not desirable.

We have found a method of processing holographic material by use of which it is possible to produce a black backing during the course of processing the exposed assembly. Also we have discovered novel holographic assemblies for use in the method of the present invention.

According to the present invention there is provided a method of forming a hologram with an integral light absorbing blackish layer which comprises forming a holographic record in a silver halide emulsion layer in a holographic assembly by means of a holographic exposure followed by silver halide development and bleaching a major part at least of the developed silver in that part of the assembly which contains the holographic record and forming an overall developed silver layer either in another silver halide layer of the assembly or in a planar section of the layer which contains the holographic record and either preventing the developed silver in this layer or section from being bleached or converting the developed silver in this layer to a blackish light absorbing material which can not be bleached by a silver bleaching agent.

Preferably the developed silver is prevented from being bleached by the presence of a bleach inhibiting agent.

In one method of the present invention there is employed a holographic assembly which comprises a silver halide emulsion layer for the holographic record and a pre-fogged silver halide emulsion layer. In another method of the present invention there is employed a holographic assembly which comprises a silver halide emulsion layer for the holographic record and a silver halide emulsion layer which is fogged after the holographic exposure or at the same time as the holographic exposure.

In yet another method of the present invention there is employed a silver halide emulsion layer for the holographic record and during processing a planar section of this layer has an overall silver layer formed therein.

According to one embodiment of the present invention there is provided a holographic assembly which comprises a transparent support base having coated thereon a holographic silver halide photographic emulsion layer which has been spectrally sensitised and in which the mean grain size of the silver halide grains, is between 0.01 and 0.1 µm and a fogged silver halide emulsion.

The holographic silver halide emulsion and the fogged emulsion may be on the same side or on different sides of the support base. If they are on the same side preferably the layer order is as follows:- transparent support base, holographic silver halide emulsion and fogged silver halide emulsion. In this way in the processed hologram the layer which contains the holographic record is protected by the overlying layer.

By holographic silver halide emulsion layer is meant a layer in which a holographic record can be formed. This means that the median grain size of the silver halide grains must be less than 0.1µm so as not to cause losses of fringe modulation by light scatter. Preferably both the silver halide emulsion layers have a median grain size of the silver halide grains of less than 0.1µm.

The silver halide emulsion should be optimally sensitised to the light-output wavelength of the coherent light source which is to be used to form hologram.

Preferably the halide of the silver halide grains is predominantly silver bromide.

In the holographic assembly of the present invention the fogged silver halide layer is converted to a black or blackish light-absorbing layer during the processing sequence. This may be accomplished in several ways.

In one embodiment a bleach inhibitor is used to prevent the developed fogged silver in the fogged emulsion layer from being bleached and in another embodiment the developed silver in the fogged emulsion layer is converted to a black or substantially neutral light absorbing compound which cannot be bleached by a silver bleaching agent of the type normally used to bleach developed silver in a photographic processing sequence.

A bleach inhibitor may be used in two ways. In the first way, a bleach inhibitor is present in the fogged silver halide emulsion layer or a bleach inhibitor precursor is present in the fogged silver halide emulsion layer.

Thus in this embodiment there is provided a holographic assembly, which comprises a transparent support base having coated thereon a holographic silver halide emulsion layer and a fogged silver halide emulsion layer which comprises either a layer substantive bleach inhibitor or a layer-substantive bleach inhibitor precursor which releases either in the presence of an alkali or in the presence of an oxidised developing agent a bleach

inhibitor of limited diffusibility.

The assembly of this embodiment is holographically exposed and then developed in a silver halide developing solution to yield in the holographic layer developed silver and in the fogged emulsion layer developed silver and a bleach inhibitor which is absorbed to the silver. After a bleaching step the developed silver in the holographic layer is removed or reconverted to silver halide in such a way that a holographic record remains but the developed silver in the fogged silver remains to act as a light absorbing black backing layer.

All known bleach inhibitors may be used but the preferred one are those described in Us 3.715 208.

These include compounds of the general formulae:

I. $R^1_a$ $(A^1)$ $XR^5$
II. $R^2_a$ $(A^2)$ X-X $(A^3)$ $R^3$
III. $R^4_a$ $(A^4)$ X- Y+

wherein a is 0 or 1 to 6, X is sulphur or selenium,
$R^1$, $R^2$, $R^3$ and $R^4$ represent a wide variety of substituent such as corresponding groups listed in US 3 715 208,
$R^5$ represents hydrogen or an acyl group having from one to 22 carbon atoms including aryloyl and alkanoyl groups (e.g. benzoyl, acetyl, propanoyl, benzothioyl, acetothioyl and the like);
Y+ represents a basic cation such as an alkali metal ion like sodium and potassium, ammonium and the like;
$A^1$, $A^2$, $A^3$ amd $A^4$ each represents a carbonyl group (C=O);
a thiocarbonyl group (C=S); a carboxymethylene group ($CH_2$-COOH); a carbocyclic ring containing three to six carbon atoms which can be part of a fused ring structure such as cycloalkylene; or a 3 to 6 membered heterocyclic ring containing at least one carbon atom and from one to five atoms selected from nitrogen, oxygen, sulfur or selenium which ring can have other carbocyclic and heterocyclic rings fused to it.

Particularly useful compounds are:

IV. 2-mercaptobenzoxazoles

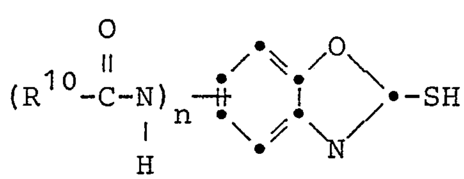

VI. 2-mercaptobenzimidazoles

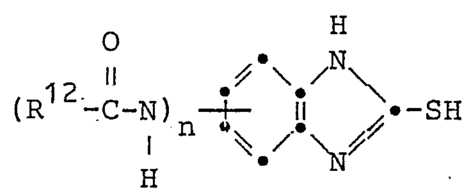

V. 2-mercaptobenzothiazoles

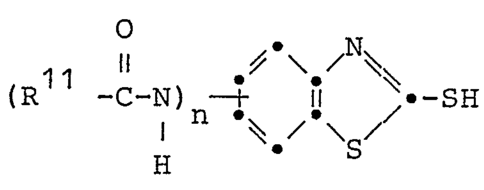

VII. 2-mercaptothiadiazoles

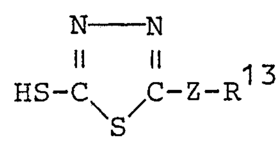

VIII. 2 mercaptotriazoles

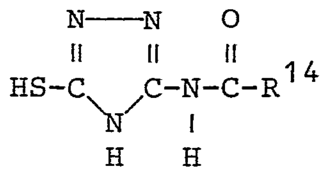

IX. 1-phenyl-5-mercapto-tetrazoles

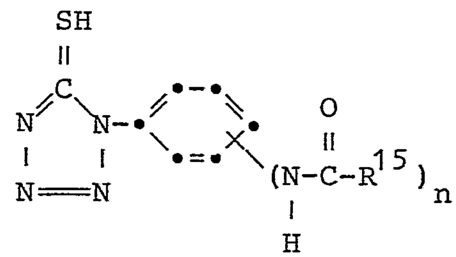

wherein

$R^{10}$, $R^{11}$, $R^{12}$ and $R^{13}$ each represents an alkyl group having from one to 17 carbon atoms preferably five to 12 carbon atoms;

$R^{13}$ and $R^{14}$ each represents an alkyl group having from five to 17 and preferably eight to 12 carbon atoms; Z represents sulfur or the group-NHCO-; and n represents 1 to 5 and preferably 1.

Useful bleach inhibitor precursor are the compounds of formula I, II and III as hereinbefore set forth having an acidic thiol or selenol which is hydrolysed in alkali.

In the second way of using a bleach inhibitor compound the fogged silver halide layer only is contacted with a solution of a ballasted bleach inhibitor. Thus in this case the fogged silver halide layer must either be on the other side of the transparent base to the holographic emulsion layer or it must be coated over the holographic emulsion layer. The ballasted bleach inhibitor compounds diffuse comparatively easily through the fogged layer which comprises the developed silver but not so easily through the holographic emulsion layer which comprises developed silver but some residual silver halide.

Care must be taken however that the assembly is contacted with the bleach inhibitor compound for sufficient time only for the bleach inhibitor compound to diffuse far enough into the assembly to produce a blackened layer at the end of the process but not far enough to prevent production of sufficient holographic fringes for efficient holographic replay. When the fogged emulsion layer is present on the reverse side of the base to the holographic emulsion layer this side of the base only is treated with the bleach inhibitor solution. Ways of preventing the emulsion on the other side of the base from being contacted by the bleach inhibitor solutions are known for example by the use of viscous processing solutions.

Suitable ballasted bleach inhibitors are those hereinbefore described with reference to US 3,715,208.

Suitable baths in which the ballasted bleach inhibitors can be dissolved are described in US 3,705,799.

In one embodiment a barier layer is present between the fogged emulsion layer and the unfogged emulsion layer, which barrier layer allow developing and bleaching solution to pass but not the ballasted bleach inhibitor.

Other compounds which could be used in this way to render the developed silver in the fogged silver halide emulsion layer unbleachable are the quarternary ammonium compounds described and formulated in US 3,243,295. Preferably however an onium compound together with a bleach inhibitor are present together in the bleach inhibitor processing bath. A greater protection of the silver against bleaching is thereby obtained. Suitable onium compounds including quarternary ammonium and phosphonium compounds are described in US 3,705,800.

In another method of the present invention the developed silver in the fogged silver halide emulsion layer is converted to a silver salt which is black or substantially neutral but which is light absorbing. Such a silver slat is silver sulphide. In this method the fogged silver halide emulsion must be on the reverse side of the base to the holographic emulsion or must be coated over the holographic emulsion. After silver development of the assembly the fogged silver halide emulsion layer only is treated with a sulphiding solution which comprises a soluble sulphide salt such as sodium sulphide. This converts the developed silver in the fogged silver halide emulsion layer to silver sulphide. Care must be taken to prevent the holographic emulsion layer underlying the fogged silver halide emulsion layer or on the reverse side of the base to the fogged silver halide emulsion layer from being contacted with the sulphide solution. Reference is made to the sulphiding method described in US 2,143,787.

Use can be made of a barrier layer between the fogged emulsion layer and the unfogged emulsion layer, the barrier layer allowing the developing and bleaching solutions to pass therethrough but presenting passage of the sulphiding solution.

Alternatively the treatment solution can contain both sulphiding and iodising compounds which also convert the silver to a compound which is substantially neutral light-absorbing, but which is not removed by bleaching. Reference is made to US 2,258,976 which describes such a process.

In another embodiment of the invention the holographic assembly employed comprises two silver halide emulsion layers which are holographically exposed to form therein a holographic record. The two silver halide layers may be on the same side of the base or may be coated on the either side of the base. This assembly is treated with a silver halide fogging solution either before the holographic exposure or preferably after the

holographic exposure in such a way that one holographic silver halide emulsion layer is substantially unaffected by this treatment. The assembly is then silver developed. Then if the silver halide emulsion layer which has been overall fogged by treatment with the fogging solution comprises a bleach inhibitor compound or precursor of the type hereinbefore described of limited diffusibility and the assembly is then subjected to a silver bleaching step this yields in the unfogged silver halide layer a holographic record and yields in the other silver halide layer on overall silver black image which acts as a black backing layer for the hologram on reconstruction.

Also if there is only one silver halide emulsion layer after the holographic exposure it is possible with care to treat the exposed surface of this layer with a solution which comprises both a fogging agent and a bleach inhibitor or bleach inhibitor precursor of limited diffusibility. The surface of this layer is then overall fogged. On subsequent silver development followed by silver bleaching there is present on the silver halide emulsion layer a holographic record but on the surface of this layer there is present an overall black silver layer which acts as a black backing layer.

As an alternative to the use of a bleach inhibitor compound or precursor these can be applied to either the separate emulsion layer or to the surface of the emulsion layer after silver development a solution of a water soluble sulphide. This converts the fogged silver in the separate layer or in the surface or in the surface of the single layer to silver sulphide which is not bleached by the silver bleaching agent. Thus a blackish light-absorbing backing is formed in the hologram after processing.

Another alternative instead of using a fogging solution is to use light to fog the silver halide emulsion layer or layers. During the holographic exposure the unmodulated or "carrier" part of the reference beam employed during the laser exposure fogs to a significant extent all the silver halide in the silver halide emulsion layer or layers. This fog is removed by the bleaching bath after silver halide development. It has been found that if after the holographic exposure but before the silver bleach step there is applied to the uppermost silver halide emulsion layer or to the surface of the single layer a solution containing either a bleach inhibitor compound or a precursor thereof both of limited diffusibility then after silver halide development and silver bleaching a holographic record is present either in the lowermost silver halide or in the single emulsion layer emulsion but there is present either in the uppermost silver halide layer on the surface of the single emulsion layer a black silver layer which acts as a black backing layer to the hologram when reconstructed. A Denisyuk exposure wherein the reference beam is always stronger than the object beam is particularly to be used in this method. Alternatively the surface of the silver halide emulsion after the holographic exposure and silver development can be treated with a solution of a soluble sulphide for a very short time to convert just the silver top surface to silver sulphide, or the uppermost emulsion layer may be so treated. By uppermost is meant that this other layer is coated on the layer which retains the holographic record or is coated on the other side of the base to this layer.

The following Examples will serve to illustrate the invention.

Example 1

Three samples of assemblies of holographic material were prepared by coating on to a transparent photographic film base a gelatino silver halide emulsion which was substantially pure silver bromide having a mean size 0.04 microns at a silver coating weight of $3.0 g/m^2$ with a gelatin coating weight of $4.5 g/m^2$. The silver halide crystals were sensitised with a red sensitising dye so that they were optimally sensitive to 633nm the emission wavelength of a He:Ne laser. Another layer of the same emulsion was coated on to the first layer. The emulsion used for this layer had been fogged before coating by preparing it in full daylight.

The control assembly contained no additions to the topmost silver halide emulson layer.

Assembly 1 contained 0.043g per gram of silver in the topmost emulsion layer of a bleach inhibitor compound of formula

(1) 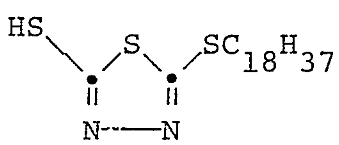

Assembly 2 contained 0.043g per gram of silver in the topmost emulsion layer of a bleach inhibitor compound of formula

(2) 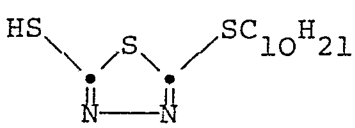

The control assembly and the assemblies 1 and 2 were holographically exposed using a 5mW He:Ne laser by a Densiyuk exposure method using a brushed aluminium plate as an object to yield (after processing) a

reflection hologram.

The processing was carried out as follows:

All the samples were developed for 2 minutes in a solution of the following formulation :

Sodium Sulphite Anhydrous 30g
Hydroquinone 10g
Sodium Carbonate 60g
Water to 1000ml

The samples were then transferred to a rehalogenating bleach bath of the following composition:

Ferric Ammonium E.D.T.A. (1.8 M solution) 150 mls
KBr 20g
Water to 1000ml
for 2 minutes.

The samples were then water washed for 2 minutes in running water.

The assemblies were then examined. In the control assembly all the silver had been bleached out leaving a transparent assembly.

In assembly 1 the topmost emulsion layer was a dense black colour due to the presence of developed silver which had not been bleached in the rehalogenating bleach step.

In assembly 2 the topmost emulsion layer has a blackish colour due to the presence of developed silver which had not been bleached in the rehalogenating bleach step.

The hologram present in each assembly was reconstructed using white light.

In the coated assembly a reflection hololgram was visible when a black background was placed in contact with the assembly.

In assembly 1 a very bright reflection hologram was visible.

In assembly 2 a bright reflection hologram was visible.

Example 2

A holographic assembly was prepared by coacting on one side of a transparent photographic film base a gelatinous silver halide emulsion which was substantially pure silver bromide having a mean size of 0.04 microns at a silver coating weight 3.0g/$m^2$ with a gelatin coating weight of 4.5 g/$m^2$. The silver halide crystals were sensitized with a red sensitizing dye so that they were optimally sensitive to 633 nm the emission wave length of a He:Ne laser. There was coated on the reverse side of the film base a layer of the same emulsion which had been fogged before coating by preparing it in full daylight.

The assembly of holographic material was holographically exposed using a 4 mW He:Ne laser by a Denisyuk exposure method using a brushed aluminium plate.

The side of the holographic assembly which comprised the overall fogged emulsion layer was treated in a device which allowed this side of the base only to be teated, with the following solution

hydrochloric acid 20g
benzoquinone 8g
sodium sulphide 30g
water to 1 litre
this solution being made-up just prior to use.

This solution after being in contact with the emulsion layer for three minutes was then washed of with water.

A black silver sulphide layer was then present in this emulsion layer.

The holographic assembly was then treated for 2 minutes in a bath which comprised

Sodium Sulphite Anhydrous 30g
Hydroquinone 10g
Sodium Carbonate 60g
Water to 1000ml

The assembly was then transferred to a rehalogenating bleach bath of the following composition :

Ferric Ammonium E.D.T.A. (1.8 M solution) 150mls
KBr 20g
Water to 1000ml
for 2 minutes

The assembly was then water washed for 2 minutes in running water.

The hologram present in the unfogged silver halide emulsion layer was reconstructed using white-light. A very bright reflection hologram was visible.

**Claims**

1. A method of forming a hologram with an integral light absorbing blackish layer which comprises forming a holographic record in a silver halide emulsion layer in a holographic assembly by means of a holographic exposure followed by silver halide development and bleaching a major part at least of the developed silver in that part of the assembly which contains the holographic record and forming

an overall developed silver layer either in another silver halide layer of the assembly or in a planar section of the layer which contains the holographic record and either preventing the developed silver in this layer or section from being bleached or converting the developed silver image in this layer to a blackish light absorbing material which can not be bleached by a silver bleaching agent.

2. A method according to claim 1 wherein the developed silver is prevented from being bleached by the presence of a bleach inhibiting agent.

3. A holographic assembly which comprises a transparent support base having coated thereon a holographic silver halide photographic emulsion layer which has been spectrally sensitised and which has a mean grain size of the silver halide grains between 0.01 and 0.1 µm, and a fogged silver halide emulsion layer.

4. A holographic assembly according to claim 3 wherein the holographic silver halide photographic emulsion layer is predominantly silver bromide.

5. A holographic assembly according to claim 3 wherein there is present in the fogged silver halide emulsion layer either a layer substantive bleach inhibitor or a layer substantive bleach inhibitor precursor which releases either in the presence of an alkali or in the presence of an oxidised developing agent a bleach inhibitor of limited diffusibility.

6. A holographic assembly according to claim 5 wherein the layer substantive bleach inhibitor is a compound of one of the general formulae:

I. $R^1{}_a-(A^1)-XR^5$

II. $R^2{}_a-(A^2)-X\text{-}X-(A^3)\,R^3$

III. $R^4{}_a-(A^4)-X-\,Y+$

wherein a is 0 to 1 to 6, X is sulphur or selenium, $R^1$, $R^2$, $R^3$ and $R^4$ represent a wide variety of substituent groups as listed in US 3,715,208, $R^5$ represent hydrogen or an acyl group having from one to 22 carbon atoms including aryloyl and alkanoyl groups;

Y+ represents a basic cation, $A^1$, $A^2$, $A^3$ and $A^4$ each represent a carbonyl group a thiocarbonyl group a carboxymethylene group a carbocyclic ring containing three to six carbon atoms which can be part of a fused ring structure such as cycloalkylene; or a 3 to 6 membered heterocyclic ring containing at least one carbon atom and from one to five atoms selected from nitrogen, oxygen, sulfur or selenium which ring can have other carbocyclic and heterocyclic rings fused to it.

7. A holographic assembly according to claim 6 wherein the layer substantive bleach inhibitor is:

a 2-mercaptobenzoxazole of the formula

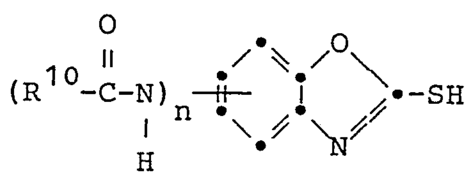

a 2-mercaptobenzothiazole of the formula

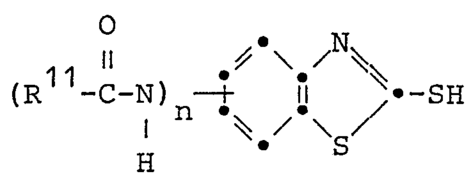

a 2-mercaptobenzimidazole of the formula

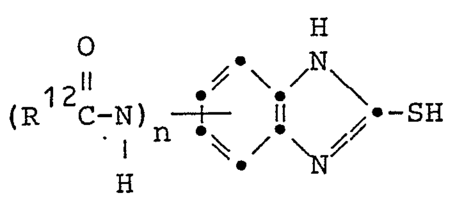

a 2-mercaptothiadiazole of the formula

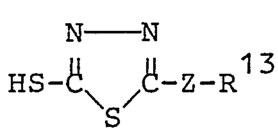

a 2-mercaptotriazole of the formula

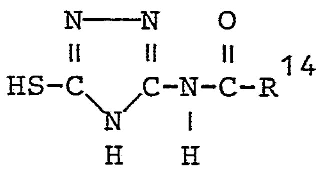

or a 1-phenyl-5-mercaptotetrazole of the formula

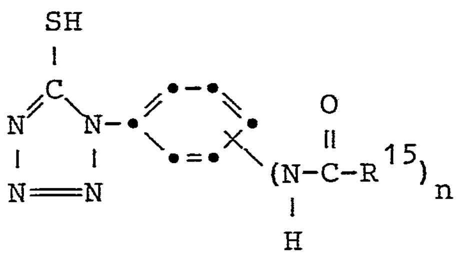

wherein $R^{10}$, $R^{11}$, $R^{12}$ and $R^{13}$ each represents an alkyl group having from one to 17 carbon atoms, $R^{13}$ and $R^{14}$ each represents an alkyl group having from five to 17 and preferably eight to 12 carbon atoms; Z represents sulfur or the group - NHCO -; and n represents 1 to 5.

8. A holographic assembly according to claim 5 wherein the layer substantive bleach inhibitor precursor is of the general formula I, II or III as set forth in claim 5 having an acidic thiol or selenol which is hydrolysed by alkali.

9. A method according to claim 1 of preparing a hologram which contains an integral light absorbing layer from a holographic assembly which comprises a transparent support base having coated thereon a holographic silver halide photographic emulsion layer which has been spectrally sensitised and which has a mean grain size of the silver halide grains between 0.01 and 0.1 µm, and a fogged silver halide emulsion layer which method comprises holographically exposing the material, developing the latent silver in the two emulsion layers and prior to, coincident with or subsequent to treating the material with a solution of a ballasted bleach inhibitor compound in such manner that the bleach inhibitor compound diffuses only into the silver halide emulsion layer which was fogged initially and then bleaching the developed silver in the holographic silver halide emulsion layer.

10. A method according to claim 1 of preparing a hologram which contains an integral light-absorbing layer form the holographic assembly which comprises a transparent support base having coated thereon a holographic silver halide photographic emulsion layer which has been spectrally sensitised and which has a mean grain size of the silver halide grains between 0.01 and 0.1 µm, and a fogged silver halide emulsion layer which method comprises holographically exposing the material, developing the latent silver in the two emulsion layers and then treating the developed silver only in the layer which was initially fogged with a sulphiding solution and then bleaching the developed silver in the holographic emulsion layer.

11. A method according to claim 9 wherein the initially fogged layer is coated on the unfogged layer and there is present between the two layers a barrier layer which allows photographic developing solution and bleaching solution to pass but which prevents the sulphiding solution from passing into the unfogged layer.

12. A method according to claim 10 wherein the initially fogged layer is coated on the unfogged layer and there is present between the two layers a barrier layer which allows photographic developing solution and bleaching solution pass but which prevents the sulphiding solution from passing into the unfogged layer.

13. A method according to claim 1 wherein the holographic assembly employed comprises two silver halide emulsion layers one of which comprises a bleach inhibitor or a bleach inhibitor precursor of limited diffusibility then treating this silver halide layer with a silver halide fogging solution either before a holographic exposure or after a holographic exposure in such a way that the other holographic silver halide emulsion layer is substantially unaffected by this treatment, silver developing the assembly and then subjecting the assembly to a silver bleaching step to yield in one layer a holographic record and to yield in the other layer on overall silver black image which acts as a black backing layer for the hologram on reconstruction.

14. A method according to claim 1 wherein the holographic assembly comprises a single silver halide emulsion layer which is holographically exposed and then the surface only of this layer is treated with a solution which comprises both a silver halide fogging agent and a bleach inhibitor or bleach inhibitor precursor of limited diffusibility, then silver halide developing the assembly and subjecting the assembly to a silver bleaching step.

15. A method according to claim 1 wherein the holographic assembly comprises a simple silver halide emulsion layer which is holographically exposed and then the surface only of this layer is treated with a solution which comprises a silver halide fogging agent, then silver developing the assembly, treating the surface of the layer with a sulphiding solution and then subjecting the assembly to a silver bleaching step.

16. A method according to claim 1 wherein the holographic assembly employed comprises two silver halide emulsion layers which assembly is holographically exposed, and wherein one silver halide layer is treated with a silver halide fogging solution either before the holographic exposure or after the holographic exposure in such a way that the other silver halide emulsion layer is substantially unaffected by this treatment, the assembly is then silver developed, and then the silver halide layer which has been overall fogged is treated with a sulphiding solution and the assembly is then subjected to a silver bleaching step.

17. A method according to claim 13 wherein instead of using a silver halide fogging solution to fog either the other silver halide emulsion layer or the surface only of the silver halide layer in which the holographic record is formed the carrier part of the reference beam used in the holographic exposure is used for the fogging.

18. A hologram which has been prepared by the method claimed in claim 1.

19. A hologram which has been prepared by the method claimed in claim 13.

20. A hologram which has been prepared by holographically exposing the holographic assembly as claimed in claim 3 developing the latent silver in the two emulsion layers by use of a silver halide developing solution and bleaching the developed silver in the holographic layer.